# EUROPEAN PATENT SPECIFICATION

(11) **EP 1 347 212 B1**
(45) Date of publication and mention of the grant of the patent: **06.06.2007**
(21) Application number: 03005917.4
(22) Date of filing: 17.03.2003
(51) Int. Cl.: F16H 57/08, F16H 1/46

(54) **Multistage reduction unit for motors**
Mehrstufiges Reduktionsgetriebe für Motoren
Réducteur à plusieurs étages pour moteur

(30) Priority: 18.03.2002 IT VI20020045
(43) Date of publication of application: 24.09.2003
(73) Proprietor: FITEM SRL, 30030 Maerne (VE) (IT)
(72) Inventor: Berengo, Giorgia, 30174 Mestre (VE) (IT)
(74) Representative: Bonini, Ercole

(56) References cited:
- DE-A- 3 403 560
- DE-B- 1 130 237
- US-A- 2 564 271

## Description

The present invention is about a reduction unit for tubular motors, that is for motors fit to be employed in the winding and unwinding of flexible cloths or other rolling elements such as, for example, windows or similar applications.

The reduction units of tubular motors are generally designed so as to fulfil different needs. The first, which is among the most important ones, is that of having a high speed reduction in the least possible space. This is key because the reduction unit is placed into a cylinder of a usually not so large diameter and that takes up an also reduced length.

The second need is that of transmitting the greatest torque possible in the abovementioned space limits.

Another very crucial need is that the reduction unit were the most quite possible because such motors are assembled inside civilian residencies and therefore inside environments wherein the noisiness is tolerated only up to a certain threshold.

In order to transmit in the right manner the greatest torque possible without having the teeth that mesh into the reduction units to be worn, is ideal that gears' teeth work according to their pitch diameter so as to have only rolling friction and not sliding friction as well which would cause the slipping, and consequently the noisiness and wear of the toothing.

For this reason, some manufacturers of these kinds of gears use plastic material in order to make the gears and do not constrain too much such gears, on the contrary they allow them to oscillate so that the teeth would adapt during the operation.

This state of the art however does not solve neither the wear problem of the gears' teeth, nor that of their noisiness.

A reduction unit described in DE 1130237 which shows the features of the preamble of claim 1 has three planetary stages. Neither this document solves the above mentioned problems.

The object of the invention is that of remedying to the previously mentioned inconveniences.

As a matter of fact, it is a first object of the invention that of making a reduction unit wherein the gears can work properly and with the most possible quietness. Another object, related to the first one, is that of making a gearing that would remain mostly unaltered in time without being subject to a quick wear.

Yet another object to be accomplished is also that of improving the quietness, without being to the detriment of a cost increase of the reduction unit.

All the previously mentioned objects and others which will be better described later on are achieved through the making of a reduction unit fit to transmit the motion of a motor's shaft to the power shaft of said reduction unit, coaxial to said motor's shaft which, in line with the content of the first claim, comprises:
- a fast stage having a first sun gear directly meshing with the motor's axis and cooperating with first planet gears whose teeth mesh with the teeth of said first sun gear and of a crown wheel;
- at least one middle stage having a second sun gear consisting upstream of a middle flange bearing the shafts of said first planet gears, and downstream of a toothed shaft, coaxial to said first sun gear, and cooperating with second planet gears whose teeth mesh with the teeth of said second sun gear and of a crown wheel;
- a slow stage, it too having a third sun gear consisting upstream of a slow flange bearing the shafts of said second planet gears, and downstream of a toothed shaft, coaxial to said first and said second sun gear, and cooperating with third planet gears whose teeth mesh with the teeth of said third sun gear and of a crown wheel;
- a power stage consisting upstream of a flange bearing the shafts of said third planet gears, and downstream of a shaft fit to transmit the power of said motor,
and that is characterized in that said middle flange and said slow flange, proper to said second and said third sun gear respectively, have a diameter which is basically equal to the head diameter of the crown wheel, such to carry out together with it a free coupling basically with no radial plays, and the downstream end of every toothed shaft proper to each of said second and third sun gear receives a dowel pin whose opposite end lodges into a coaxial hole of every flange placed downstream of each of said toothed shaft.

Advantageously, according to the invention every sun gear proper to the second and third stage is guided into each of the opposite ends that is of the toothed part of the sun gear thanks to a pin, while the flanged part is guided by brushing against the top of the teeth of the crown wheel where they mesh with the planet gears supported by said flange.

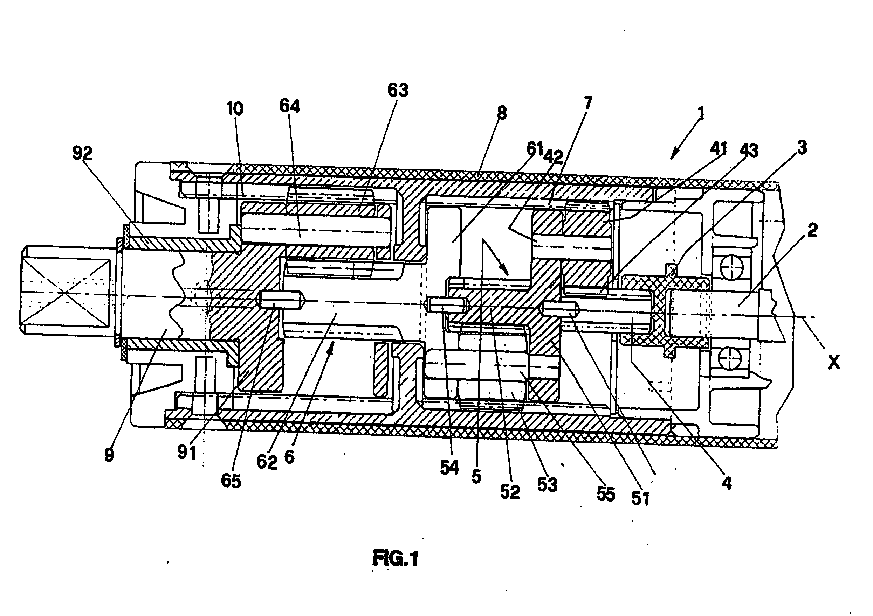

Further constructional features and particularities will be better highlighted in an exemplary but not limiting way in the description of a preferred embodiment and illustrated in the drawing of figure 1 which is the section of the reduction unit connected to the shaft of an electric motor.

Referring to the mentioned figure it is described that the reduction unit, generally indicated with the number 1, is driven by the end of a shaft 2 proper to an electric motor not shown in the figure, which meshes through a joint 3 with a first sun gear 4 proper to the first fast stage of the reduction unit.

The sun gear 4 meshes with a number of planet gears 41, usually three or four, whose supporting spindles 42 are lodged by the flange 51 of the second sun gear 5.

The teeth 43 of each first planet gear 41 mesh, other than with the first sun gear 4, also with the crown wheel 7 which is fixed to the casing 8 of the reduction unit.

The first planet gears 41 transmit the motion to the second sun gear 5 proper to the first middle stage of the reduction unit because the upstream flanged part 51 lodges the spindles 42 of the planet gears 41.

The front part of the second sun gear 5, indicated with the number 52, is toothed and its teeth mesh with second planet gears 53 whose teeth on their turn mesh with the crown wheel 7.

According to the invention, the flange 51 proper to the second sun gear 5 has a diameter basically equal to the head diameter of the teeth of the crown wheel 7 so as to make with it a free coupling basically with no radial plays.

In addition, frontally, in the toothed shaft 52 part of the second sun gear 5, there is a dowel pin 54, which is coaxial to the main axis X of the reduction unit, and that said pin is half-lodged into a hole made on the front part of the toothed shaft 52 while the other half is inserted into a coaxial hole of the following flange 61 proper to the third sun gear 6 of the slow stage of the reduction unit.

It is thus understood that, according to the invention, the second sun gear 5 is guided both in relation to the axis through the pin 54, and in line with the diameter of the flange in the most rearward part of the sun gear so as to achieve a basically perfect guide that is also free of plays which would damage the teeth and surely cause the gears' noisiness.

In a similar way, this happens for the third slow stage and for the third sun gear 6 which has indeed a flange 61 supporting the spindles 55 of the planet gears 53 proper to the middle stage.

The sun gear 6 frontally has a toothed shaft 62 part whose teeth mesh with the planet gears 63 supported by the spindles 64 which lodge into the flange 91 of the power shaft 9 that is the slow output shaft of the reduction unit.

It must be noticed in this case as well that the sun gear 6 has the diameter of the flange 61 basically equal to the head diameter of the crown wheel 7 and the guide pin 65 coaxial to the axis X of the reduction unit thanks to which the sun gear 6 is kept guided both by the pin 65 and by the fact that the diameter of the flange is guided by the crown wheel 7, by brushing against it.

Even in this case the kinematical element that is the sun gear 6, which, just like the sun gear 5, is more subject to stresses and oscillations, is guided fore and aft so as not to undergo any kind of oscillation.

The spindles 64 supporting the planet gears 63 drive into motion the flange 91 of the slow shaft 9 which transmits the output power of the reduction unit.

Such shaft 9 is guided and supported by a bush 92 as well as upstream by a pin 65.

In this case the diameter of the flange 91 does not necessarily have to be equal to the head diameter of the crown wheel 10, because the bush 92 and the pin 65 guarantee a more than safe centering.

Carried out tests have demonstrated that the making of a reduction unit with the invention's characteristics has brought to a reduction of the noisiness of the whole unit.

Furthermore it has been noticed that there are no considerable wear marks in the teeth of the gears and this is exactly due to the perfect centering of the sun gears as well as of the planet gears connected to them whose teeth efficiently work on the pitch diameter as the theory would require and unlike the state of the art constructions which very often are not able to carry it out.

## Claims

1. A reduction unit (1) fit to transmit the motion of a motor's shaft (2) to a power shaft (9) of said reduction unit, coaxial to said motor's shaft comprising:
- a fast stage having a first sun gear (4) directly meshing with the motor's, shaft and cooperating with first planet gears (41) whose teeth (43) mesh with the teeth of said first sun gear and of a crown wheel (7);
- at least one middle stage having a second sun gear (5) consisting upstream of a middle flange (51) supporting the spindles (42) of said first planet gears, and downstream of a toothed shaft (52), coaxial to said first sun gear (4), and cooperating with second planet gears (53) whose teeth mesh with the teeth of said second sun gear (5) and of a crown wheel (7);
- a slow stage, having a third sun gear (6) and consisting upstream of a slow flange (61) supporting the spindles (55) of said second planet gears (53), and downstream of a toothed shaft (62), coaxial to said first and said second sun gear, and cooperating with third planet gears (63) whose teeth mesh with the teeth of said third sun gear and of a further crown wheel (10);
- a power stage consisting upstream of a flange (91) supporting the spindles (64) of said third planet gears (63), and downstream of said shaft (9) fit to transmit the power of said motor,
**characterized in that** said middle flange (51) and said slow flange (61), proper to said second and said third sun gear respectively (5,6) have a diameter which is basically equal to the head diameter of the crown wheel (7), such to carry out together with it a free coupling basically with no radial plays, and the downstream end of every toothed shaft (52, 62) proper to each of said second and third sun gears (5,6) receives a dowel pin (54, 65) whose opposite end lodges into a coaxial hole of every flange (61, 91) placed downstream of each of said toothed shaft (52,62).

2. The reduction unit according to claim 1), **characterized in that** the teeth of said first planet gears (41) and of said second planet gears (51) mesh with the same crown wheel (7), said crown wheel (7) being fixed to the casing (8) of said reduction unit.

3. The reduction unit according to claim 1) or 2), **characterized in that** the teeth of said third planet gears (63) mesh with a crown wheel (10) different from the crown wheel (7) where said first and said second planet gears mesh with.

4. The reduction unit according to claim 1), **characterized in that** said shaft (9) proper to the power stage is supported by a flanged bush (92) and is further guided by a dowel pin (65), lodged at one end into the hole of the flanged part (91) of said shaft, and at the other end into the hole proper to the end of the toothed shaft (62) of said third sun gear.

## Patentansprüche

1. Eine Untersetzungseinheit (1), dazu geeignet, die Bewegung einer Motorwelle (2) an die Antriebswelle (9) der koaxial zur Motorwelle stehenden Untersetzungseinheit zu übertragen, Folgendes umfassend:
- eine schnelle Stufe mit einem ersten Sonnenrad (4), das direkt in die Motorwelle eingreift und mit ersten Umlaufgetrieben (41) zusammenwirkt, deren Zähne (43) in die Zahnung des ersten Sonnenrads und in jene eines Zahnkranzes (7) eingreifen;
- wenigstens eine mittlere Stufe mit einem zweiten Sonnenrad (5), stromaufwärts aus einem Zwischenflansch (51) bestehend, welcher die Spindeln (42) der ersten Umlaufgetriebe trägt, und stromabwärts aus einer Zahnwelle (52) bestehend, die koaxial zum ersten Sonnenrad (4) steht und mit zweiten Umlaufgetrieben (53) zusammenwirkt, deren Zähne in die Zahnung des zweiten Sonnenrads (5) und jene eines Zahnkranzes (7) eingreifen;
- eine langsame Stufe mit einem dritten Sonnenrad (6), stromaufwärts aus einem langsamen Flansch (61) bestehend, welcher die Spindeln (55) der zweiten Umlaufgetriebe (53) trägt, und stromabwärts aus einer Zahnwelle (62) bestehend, die koaxial zum ersten und zum zweiten Sonnenrad steht und mit dritten Umlaufgetrieben (63) zusammenwirkt, deren Zähne in die Zahnung des dritten Sonnenrads und in jene eines weiteren Zahnkranzes (10) eingreifen;
- eine Leistungsstufe, stromaufwärts aus einem Flansch (91) bestehend, welcher die Spindeln (64) der dritten Umlaufgetriebe (63) trägt, und stromabwärts aus der Welle (9) bestehend, die geeignet ist, die Motorleistung zu übertragen,
**dadurch gekennzeichnet, dass** der Zwischenflansch (51) und der langsame Flansch (61), die jeweils zum zweiten bzw. zum dritten Sonnenrad (5, 6) gehören, einen Durchmesser haben, der im Wesentlichen dem Kopfdurchmesser des Zahnkranzes (7) entspricht, so dass sie gemeinsam mit diesem eine freie Kupplung, im Wesentlichen ohne radiales Spiel, herstellen, und das stromabwärts gerichtete Ende jeder Zahnwelle (52, 62), die jeweils zum zweiten bzw. dritten Sonnenrad (5, 6) gehört, einen Führungszapfen (54, 65) aufnimmt, dessen entgegen gesetztes Ende in einem koaxialen Loch jedes Flansches (61, 91) steckt, der stromabwärts von jeder Zahnwelle (52, 62) angeordnet ist.

2. Die Untersetzungseinheit gemäß Patentanspruch 1), **dadurch gekennzeichnet, dass** die Zähne der ersten Umlaufgetriebe (41) und der zweiten Umlaufgetriebe (51) in denselben Zahnkranz (7) eingreifen, wobei dieser Zahnkranz (7) am Gehäuse (8) der Untersetzungseinheit befestigt ist.

3. Die Untersetzungseinheit gemäß Patentanspruch 1) oder 2), **dadurch gekennzeichnet, dass** die Zähne der dritten Umlaufgetriebe (63) in einen anderen Zahnkranz (10) als der Zahnkranz (7) eingreifen, in welchen die ersten und die zweiten Umlaufgetriebe eingreifen.

4. Die Untersetzungseinheit gemäß Patentanspruch 1), **dadurch gekennzeichnet, dass** die Welle (9) der Leistungsstufe durch eine Flanschbuchse (92) gestützt und des weiteren durch einen Führungszapfen (65) geführt wird, der mit einem Ende im Loch des geflanschten Teils (91) der Welle steckt und mit dem anderen Ende in dem Loch des Endes der Zahnwelle (62) des dritten Sonnenrads.

## Revendications

1. Un réducteur (1) adapté pour transmettre le mouvement d'un arbre de moteur (2) à un arbre de commande (9) dudit réducteur, coaxial audit arbre de moteur comprenant:
- un étage rapide ayant un premier planétaire (4) s'engrenant directement avec l'arbre de moteur et coopérant avec des premiers satellites (41) dont les dents (43) s'engrènent avec les dents dudit premier planétaire et d'une grande couronne (7);
- au moins un étage intermédiaire ayant un deuxième planétaire (5) se composant en amont d'une bride intermédiaire (51) supportant les mandrins (42) desdits premiers satellites, et en aval d'un arbre denté (52), coaxial audit premier planétaire (4), et coopérant avec de deuxièmes satellites (53) dont les dents s'engrènent avec les dents dudit deuxième planétaire (5) et d'une grande couronne (7);
- un étage lent ayant un troisième planétaire (6) et se composant en amont d'une bride lente (61) supportant les mandrins (55) desdits deuxièmes satellites (53), et en aval d'un arbre denté (62), coaxial auxdits premier et deuxième planétaires, et coopérant avec de troisièmes satellites (63) dont les dents s'engrènent avec les dents dudit troisième planétaire et d'une ultérieure grande couronne (10);
- un étage de puissance se composant en amont d'une bride (91) supportant les mandrins (64) desdits troisièmes satellites (63), et en aval dudit arbre (9) adapté pour transmettre la puissance dudit moteur,
**caractérisé en ce que** ladite bride intermédiaire (51) et ladite bride lente (61), appartenant respectivement auxdits deuxième et troisième planétaires (5, 6) ont un diamètre qui est essentiellement égal au diamètre de la tête de la grande couronne (7), de façon à réaliser avec celle-ci un accouplement libre essentiellement sans jeux radiaux, et l'extrémité en aval de chaque arbre denté (52, 62) appartenant à chacun desdits deuxième et troisième planétaires (5, 6) reçoit une goupille de positionnement (54, 65) dont l'extrémité opposée est logée dans un trou coaxial de chaque bride (61, 91) situé en aval de chacun desdits arbres dentés (52, 62).

2. Le réducteur selon la revendication 1) **caractérisé en ce que** les dents desdits premiers satellites (41) et desdits deuxièmes satellites (51 ) s'engrènent avec la même grande couronne (7), ladite grande couronne (7) étant fixée au boîtier (8) dudit réducteur.

3. Le réducteur selon la revendication 1) ou 2) **caractérisé en ce que** les dents desdits troisièmes satellites (63) s'engrènent avec une grande couronne (10) différente de la grande couronne (7) où lesdits premiers et deuxièmes satellites s'engrènent.

4. Le réducteur selon la revendication 1) **caractérisé en ce que** ledit arbre (9) appartenant à l'étage de puissance est supporté par une bague à collerette (92) et en plus est guidé par une goupille de positionnement (65), logée d'une extrémité dans le trou de la partie bridée (91) dudit arbre, et de l'autre extrémité dans le trou appartenant à l'extrémité de l'arbre denté (62) dudit troisième planétaire.
